# EUROPEAN PATENT APPLICATION

(11) **EP 1 270 463 A2**
(43) Date of publication of application: **02.01.2003**
(21) Application number: 02014169.3
(22) Date of filing: 25.06.2002
(51) Int. Cl.: B65G 47/90, B65B 43/46

(54) **Apparatus and method for extracting product-filled bags from retainers**

(30) Priority: 25.06.2001 JP 2001192027
(71) Applicant: Toyo Jidoki Co., Ltd., Tokyo (JP)
(72) Inventor: Hiramoto, Shinichi, Iwakuni-shi, Yamaguchi (JP); Tsutsui, Shoji, Iwakuni-shi, Yamaguchi (JP)
(74) Representative: Schubert, Siegmar

(57) **Abstract**

An apparatus for extracting product-filled bags from retainers (R) that are conveyed along a rectilinear path. The extracting apparatus includes a base member (7) disposed along a base guide path parallel to the rectilinear path of the retainers so that the base member is free to make a reciprocating motion, a frame member (16) supported on a supporting shaft (15) on the base member (17) so as to swing upward and downward, a sliding shaft member (31) supported on the frame member (16) so as to advance and retract, and a holding means (37) disposed on the front end portion of the sliding shaft member. A cylindrical cam roller (27) is attached to a cam roller attachment link (23) which is pin-connected to the lower portion of the frame member (16), and the cam roller (27) rolls through the cam groove (28) of a raising-and-lowering cam (29), thus allowing the frame member (16) to swing upward and downward about the supporting shaft (15).

## Description

### BACKGROUND OF THE INVENTION

### 1. Field of the Invention

The present invention relates to an apparatus for extracting product-filled bags from retainers that are conveyed along a rectilinear path at a specified conveying pitch and speed in a retainer type bag-filling packaging system.

### 2. Prior Art

An extraction apparatus of this type is described in, for instance, Japanese Patent Application Laid-Open (Kokai) No. H8-143145. In this robot type extraction apparatus, gripping means that hold containers are moved along multiple axes.

More specifically, the gripping means track the conveying of the containers. When the gripping means are lowered, they grip the upper ends of a plurality of containers, after which the gripping means are raised so as to extract the containers from the retainers. The gripping means are then moved to the side of the retainer conveying path and release the gripping action so as to place the containers on a conveying means, after which the gripping means return to their original position and repeat the above-described operation.

However, in the case of this robot type extraction device, the structure and control system that are used in order to cause the gripping means to perform three-dimensional movements are complicated, and the maintenance and cleaning characteristics are poor. Furthermore, when numerous containers are gripped at the same time, the burden on the driving system is large.

Japanese Patent Application Laid-Open (Kokai) No. 2000-318714 describes a servo loop type extraction apparatus.

In this servo loop type extraction apparatus, numerous gripping means disposed at equal intervals are moved in one direction along an annular track that has a pair of parallel portions. The gripping means are moved continuously at a constant speed on the first side of the parallel portions and moved intermittently by a distance that is an integral multiple of the attachment spacing of the gripping means on the second side of the parallel portions. The gripping means track the conveying of the retainers on the first side. In this process, an operation in which the gripping means are lowered and grip the upper ends of the bags, after which the gripping means are raised so that the bags are extracted from the retainers, is continuously performed. Then, when the gripping means reach the second side, the gripping means are intermittently stopped, and at the same time, the gripping of a plurality of bags is released so that the bags drop onto a conveyor.

This apparatus is capable of high-speed processing. However, the structure is complicated, and the maintenance and cleaning characteristics are poor. Furthermore, since the apparatus is large, the cost is increased, and a large installation space is required for the overall packaging system.

Furthermore, Japanese Patent Application laid-Open (Kokai) No. S57-204802 describes a method for extracting retainers.

In this extraction method, a pair of continuously rotating suspended belts are horizontally disposed in positions above a retainer conveying path, and the areas in the vicinity of the mouth portions of the bags are held by the suspended belts. The retainers are conveyed along a lowering path that is inclined downward so that the bags are pulled out of the retainers, and the bags are then released at the end portions of the suspended belts so that the bags are dropped onto a conveyer.

In this method, as in the above-described servo loop system, bag extraction is performed continuously; however, the structure is simple. On the other hand, since the bags are pulled out of the inclined retainers in a vertical attitude, the retainers and bags interfere, resulting in problems such as bag deformation, the generation of damage and pinholes, and the retainers being knocked over.

### SUMMARY OF THE INVENTION

The present invention was made in the light of the problems encountered in the above-described conventional extraction apparatuses.

It is an object of the present invention to provide an extraction apparatus in which the structure and control system are simple, the burden on the driving system is small, and the apparatus can be made compact.

It is another object of the present invention to provide an extraction method that simplifies the structure of the extraction apparatus even further.

The above objects are accomplished by a unique structure for an apparatus for extracting product-filled bags from retainers that are conveyed along a rectilinear path at a specified conveying pitch and speed in a retainer type bag-filling packaging system, the product-filled bag extraction apparatus is characterized in that it comprises: a base member which is disposed so as to be free to make a reciprocating motion along a base guide path that is parallel to a rectilinear path of retainers, a reciprocating driving means which causes the base member to make the reciprocating motion, a frame member supported on a supporting shaft which is on the base member disposed parallel to the base guide path so that the frame member is free to swing upward and downward, an upward-downward swinging means which causes the frame member to swing upward and downward along with a reciprocating motion of the base member, a sliding shaft member which is disposed perpendicular to the base guide path and is supported on the frame member so as to be free to advance and retract in a direction of axis thereof, a holding means which is disposed on a front end portion of the sliding shaft member and is equipped with a pair of holding members that hold areas in the vicinity of mouth portions of product-filled bags, an advancing-and-retracting driving means which causes the sliding shaft member to advance and retract, and an opening-and-closing driving means which is attached to the sliding shaft member and advances and retracts together with the sliding shaft member, thus opening and closing the pair of holding members.

It is desirable that the above-described holding members be able to hold a plurality of product-filled bags at the same time.

In the above apparatus for extracting product-filled bags, the advancing-and-retracting driving means is comprised of, for instance: a swing member which is shaft-supported on a supporting shaft that is parallel on the base member to the base guide path so that the swing member is free to swing, the swing member having a first lever and a second lever, a connecting member which connects the first lever and the sliding shaft member, a cam roller which is disposed on a tip end of the second lever and has a rotating shaft in a plane that is perpendicular to the base guide path, and an advancing-and-retracting cam which has a cam groove through which the cam roller rolls, the advancing-and-retracting cam being disposed in a plane that is parallel to the base guide path and is free to make a reciprocating motion in the plane; and the swing member swings along with a reciprocating motion of the advancing-and-retracting cam, and the sliding shaft member advances and retracts in linkage with a swing motion of the swing member.

The supporting shaft may also be used as the supporting shaft of the frame member, and the swing member may also be fitted over this supporting shaft and shaft-supported so that the swing member is free to pivot.

Depending on the conveying configuration of the retainers, it may not be necessary to cause the sliding shaft member to advance and retract. In such a case, the extraction apparatus comprises: a base member which is disposed so as to be free to make a reciprocating motion along a base guide path that is parallel to a rectilinear path of retainers, a reciprocating driving means which causes the base member to make the reciprocating motion, a frame member supported on a supporting shaft which is on the base member disposed parallel to the base guide path so that the frame member is free to swing upward and downward, an upward-downward swinging means which causes the frame member to swing upward and downward along with a reciprocating motion of the base member, a holding means which is disposed on a front end portion of the frame member and is equipped with a pair of holding members that hold the areas in the vicinity of mouth portions of product-filled bags, and an opening-and-closing driving means that opens and closes the pair of holding members.

This extraction apparatus is simplified in its structure.

In the above-described two extraction apparatuses of the present invention, the upward-downward swinging means is comprised of, for instance: a cam roller attachment link, one end thereof being pin-connected to the frame member, a cam roller which is attached to the cam roller attachment link and has a horizontal axis of rotation in a plane that is perpendicular to the base guide path, a fixed raising-and-lowering cam which has a cam groove through which the cam roller rolls, and a connecting link, one end thereof being pin-connected to another end of the cam roller attachment link and another end thereof being pin-connected to the base member; and the connecting link, the cam roller attachment link and the frame member form a parallel link mechanism.

Furthermore, the cam roller is raised and lowered in linkage with a reciprocating motion of the base member, thus causing the cam roller attachment link to perform a translational motion, so that an axis of rotation of the cam roller is maintained in a horizontal attitude.

Consequently, a cylindrical roller can be used as the cam roller. Such a cylindrical cam roller can withstand a large load.

Furthermore, the above objects are accomplished by an extraction method of the present invention that extracts product-filled bags from retainers that are continuously or intermittently conveyed in a retainer type bag-filling packaging system, and the extraction method includes the steps of: inclining retainers in a vertical plane with respect to a retainer conveying direction, holding areas in the vicinity of mouth portions of product-filled bags by holding members, extracting the product-filled bags substantially along a direction of inclination and transferring the bags out of the retainer conveying path, and dropping the product-filled bags.

By inclining the retainers in the plane perpendicular to the conveying direction, it is possible to convey the product-filled bags to the outside of the retainer conveying path merely by extracting the product-filled bags from the retainers "as is" along the direction of inclination.

In the case of continuous conveying, the holding members are naturally caused to move while tracking the conveying path at the same speed as the retainers. During this movement, the product-filled bags are held by the holding members and extracted. Furthermore, after the product-filled bags have been dropped, it is necessary for the holding members to return to their original position (on the upstream side). For this movement, the extraction apparatuses of the above-described simplified type can be used. On the other hand, in the case of intermittent conveying and extraction while the conveying is stopped, such a tracking motion and return are unnecessary.

### BRIEF DESCRIPTION OF THE DRAWINGS

Figure 1 is a top view of the extraction apparatus (including three units) according to the present invention;
Figure 2 is a sectional side view thereof;
Figure 3 is a sectional back view thereof;
Figure 4 is a sectional top view of a part of the holding means and advancing-and-retracting driving means;
Figure 5 is a sectional top view of a part of the opening-and-losing driving means and advancing-and-retracting driving means;
Figure 6 is a top view (partially in cross-section) of a part of the advancing-and-retracting driving means;
Figure 7 is a side view of the product-filled bag conveying apparatus;
Figure 8 is a front view of one of the chutes of the conveying apparatus; and
Figures 9A through 9D are explanatory diagrams of the extraction method of the present invention.

### DETAILED DSCRIPTION OF THE INVENTION

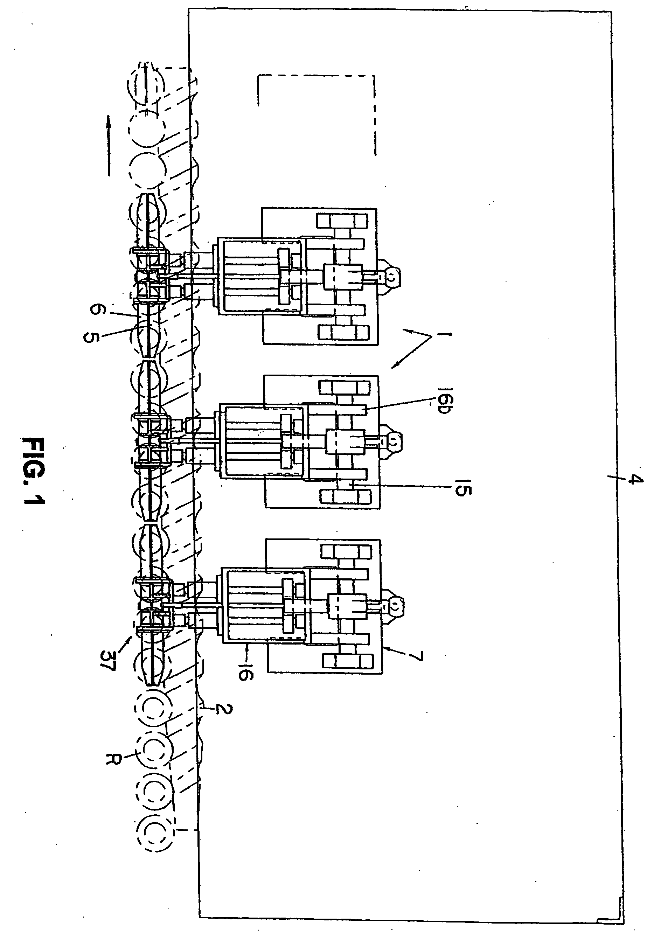

The extraction apparatus and extraction method of the present invention will be described below in detail with reference to Figures 1 through 9.

First, Figure 1 shows an extraction apparatus which is disposed along the rectilinear path of retainers R in a retainer type bag-filling packaging system.

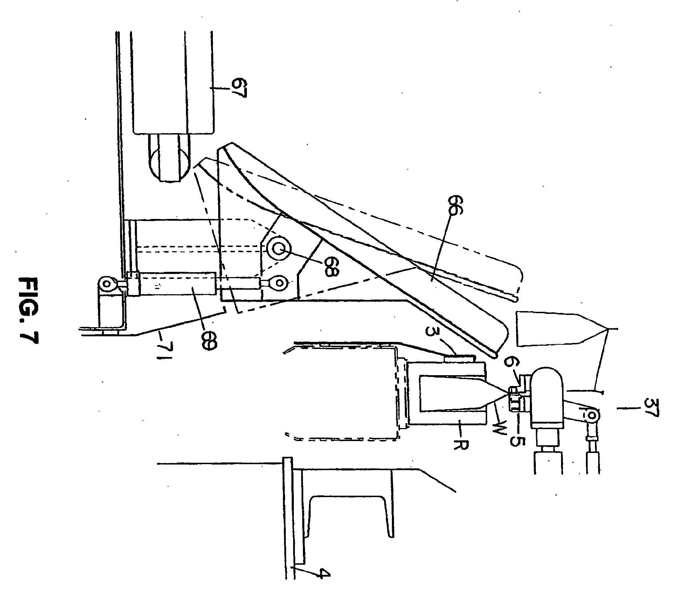

In this rectilinear path, the retainers R are continuously conveyed in the direction indicated by the arrow at a specified conveying pitch and speed inside a retainer conveying means (screw conveyor) 2. The orientation of the retainers R is regulated by a retainer conveying guide 3 (see Figure 7) so that the direction of bag width of the product-filled bags W is oriented in the forward-rearward direction. A plurality of units of this extraction apparatus 1 are disposed in a row on a base 4 along the rectilinear path, and the respective holding members 5 and 6 are disposed in a straight row.

In this extraction apparatus, the holding members 5 and 6 are initially located on the rectilinear path of the retainers R (in positions indicated by the solid lines in Figure 1) in an open state, and move while tracking the retainers R in the direction indicated by the arrow. In the process of this movement, the holding members 5 and 6 hold the areas in the vicinity of the mouth portions of a plurality of product-filled bags (4 bags × 3 units) from the upper side, and are then raised so that the product-filled bags are pulled out of the retainers R (positions indicated by the imaginary lines in Figure 1). Then, the holding members 5 and 6 are moved out of the rectilinear path of the retainers R, and the holding members 5 and 6 open and drop the product-filled bags. The holding members 5 and 6 may initiate the movement out of the rectilinear path while being raised. In either case, the holding members 5 and 6 return to their original positions (positions indicated by the solid lines in Figure 1) after dropping the product-filled bags and wait until the timing of the next extraction.

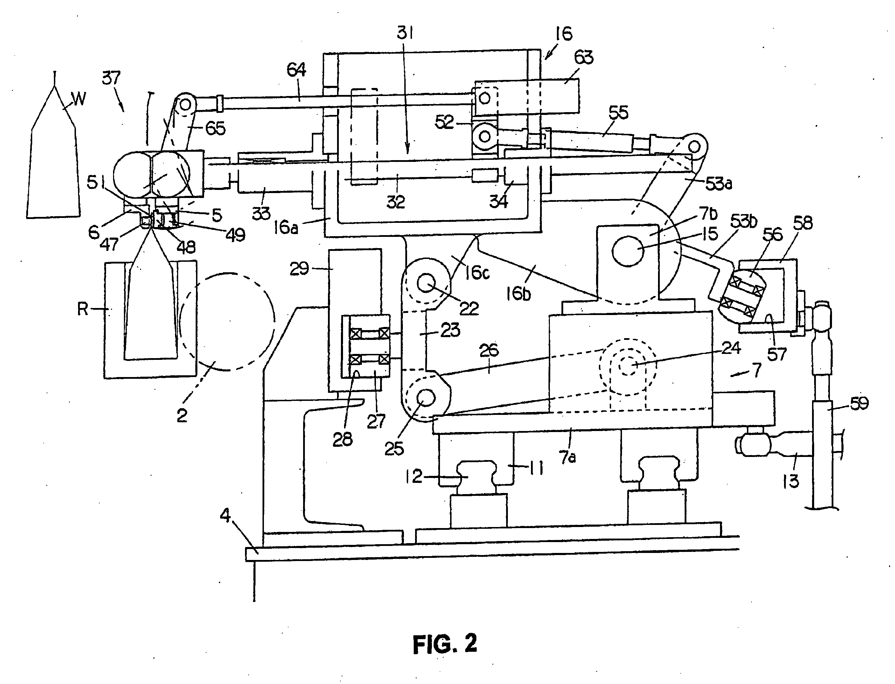

Next, this extraction apparatus 1 will be described in detail with reference to Figures 2 through 6.

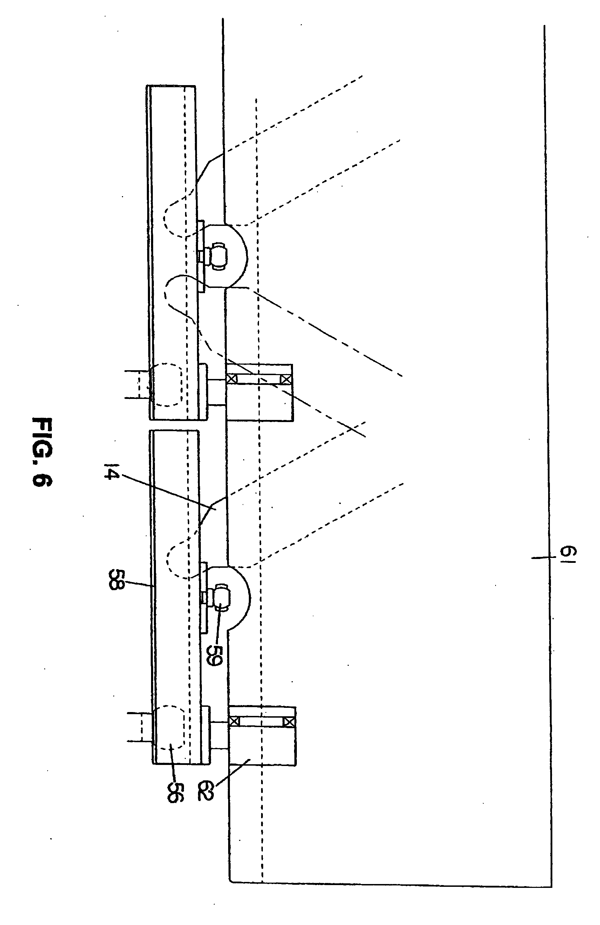

As shown especially clearly in Figure 2, the main section of the extraction apparatus 1 is installed on a base member 7 that makes a reciprocating motion on a base 4 along a base guide path that is parallel to the rectilinear path of the retainers R. In addition to the base main body portion 7a, the base member 7 includes attachment portions 7b and 7c (described later) that are fastened to the upper surface of the base main body portion 7a. Slide members 11 are fastened to the undersurface of the base main body portion 7a, and these slide members 11 are free to slide on slide rails 12 that are fastened to the base 4. Furthermore, the base main body portion 7a is connected via a connecting rod 13 to a swinging lever 14 (see Figure 6) which is caused to make a reciprocating swing motion by a driving source that is not shown in the drawings. As a result, the base member 7 makes a reciprocating motion between the position indicated by the solid lines and the position indicated by the imaginary lines in Figure 1.

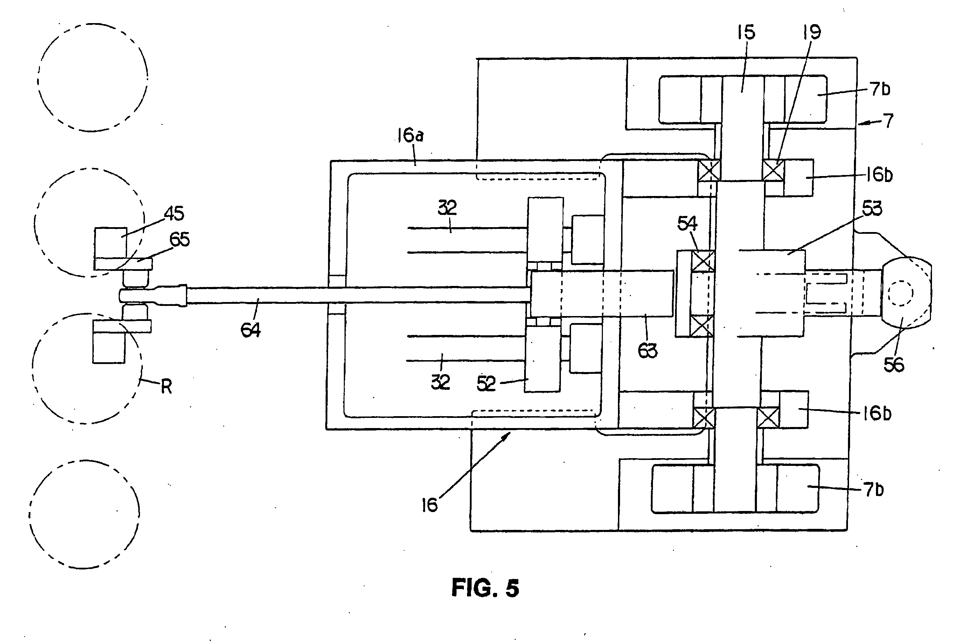

A supporting shaft 15 is fastened to the attachment portion 7b parallel to the above-described base guide path, and a frame member 16 is supported on this supporting shaft 15 so that this frame member 16 is free to swing upward and downward. In addition to a box-shaped frame main body portion 16a, the frame member 16 includes a pair of swing supporting portions 16b, which are attached to the rear portion of the frame main body portion 16a; and bearings 19 (see Figure 5) which are fastened to the end portions of these swing supporting portions 16b are fitted over the supporting shaft 15. Furthermore, raising-and-lowering supporting portion 16c (described later) is attached to the lower portion of the frame main body portion 16a as a part of the frame member 16.

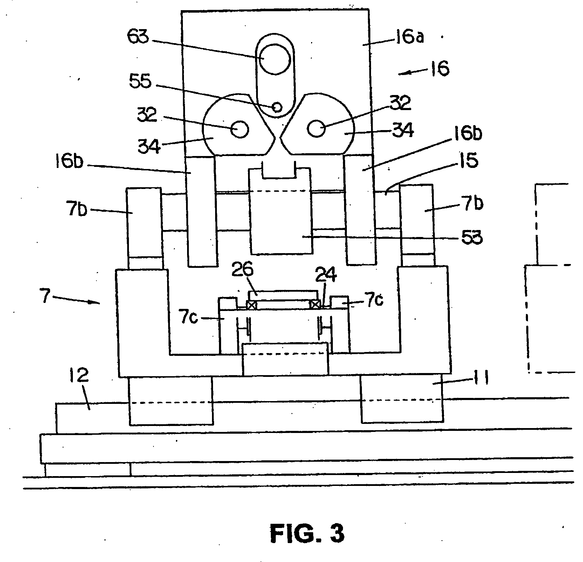

An upward-downward swinging means which causes the frame member 16 to swing upward and downward about the supporting shaft 15 is disposed on the lower portion of the frame member 16. The upward-downward swinging means includes a cam roller attachment link 23, a connecting link 26, a cam roller 27 and a fixed raising-and-lowering cam 29. The upper end of the cam roller attachment link 23 is pin-connected (via a connecting pin 22) to the raising-and-lowering supporting portion 16c. The rear end of the connecting link 26 is pin-connected (via a connecting pin 24) to the attachment portion 7c (see Figure 3) of the base member 7, and the front end of the connecting link 26 is pin-connected (via a connecting pin 25) to the lower end of the cam roller attachment link 23. The cam roller 27 is attached to the central portion of the cam roller attachment link 23 so as to face forward, and it has a horizontal axis of rotation in the plane perpendicular to the above-described base guide path. The fixed raising-and-lowering cam 29 has a cam groove 28 through which the cam roller 27 rolls.

In the above-described upward-downward swinging means, the axial centers of the supporting shaft 15 and connecting pin 24 are on the same vertical line, and the distance between the axial centers of the supporting shaft 15 and the connecting pin 22 and the distance between the axial centers of the connecting pin 24 and the connecting pin 25 are set equal to each other. Furthermore, the distance between the axial centers of the supporting shaft 15 and the connecting pin 24 and the distance between the axial centers of the connecting pin 22 and the connecting pin 25 are also set equal to each other. Thus, a parallel link mechanism consisting of the cam roller attachment link 23 and connecting link 26, and the frame member 16 and base member 7, is formed (the each frame member 16 and base member 7 form one joint of the parallel link mechanism). Accordingly, while the cam roller 27 is raised and lowered in linkage with the reciprocating motion of the base member 7, the cam roller attachment link 23 performs a translational motion; as a result, the axis of rotation of the cam roller 27 is always maintained in a horizontal attitude. Consequently, a cylindrical roller that can withstand a large load can be used as the cam roller 27.

The frame member 16, etc. are supported by the supporting shaft 15 so that these elements are free to swing, and thus the total weight of these elements is distributed between the supporting shaft 15 and the cam roller 27. Accordingly, the application of a large load to the cam roller 27 alone can be avoided, and the upward-downward swinging means (and reciprocating driving means) can be reduced in size.

Furthermore, the cam roller attachment link 23 is raised and lowered with the raising and lowering of the cam roller 27. In the present invention, it is set so that the connecting link 26 that forms one joint of the parallel link mechanism does not incline greatly from the horizontal state. In other words, even when the cam roller 27 is lowered to the maximum extent so that the connecting link 26 is maximally inclined downward, the attitude of the connecting link 26 is close to horizontal as shown in Figure 2. When the cam roller 27 is raised to the maximum extent, the connecting link 26 is merely inclined upward to approximately the same extent. Accordingly, the cam roller attachment link 23 is raised and lowered substantially in a vertical direction. Consequently, the horizontal movement of the cam roller 27 that accompanies this raising and lowering is small, and there is little deviation from the cam groove 28, such being an advantage of the present invention.

The sliding shaft member 31 faces in the forward-rearward direction (in the plane perpendicular to the above-described base guide path) on the frame main body portion 16a and is supported so that the sliding shaft member 31 is free to advance and retract in the axial direction. The sliding shaft member 31 consists of a pair of sliding shafts 32. The respective sliding shafts 32 are supported so as to be free to slide in bushes inside bearing holders 33 and 34 which are fastened to the front and rear walls of the frame main body portion 16a, and a holding means 37 equipped with a pair of holding members 5 and 6 is installed on the front end portions of the sliding shafts 32.

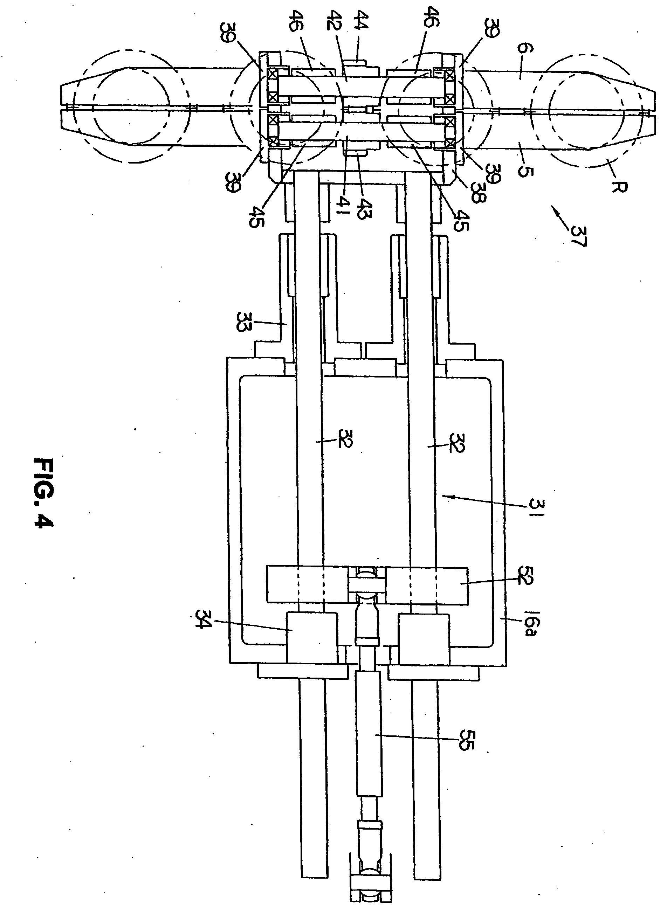

As shown in Figure 4, the holding means 37 is supported on a supporting frame 38 which is fastened to the front end of the sliding shaft member 31. The holding means 37 includes, along with other elements, a pair of opening-and-closing supporting shafts 41 and 42, gears 43 and 44 and attachment members 45 and 46. The opening-and-closing supporting shafts 41 are supported so as to be free to pivot inside bearing holders 39 fastened to both side walls. The gears 43 and 44 are fastened to the respective opening-and-closing supporting shafts 41 and 42 and engage with each other. The attachment members 45 and 46 fasten the holding members 5 and 6 to the lower ends of the respective opening-and-closing supporting shafts 41 and 42.

The holding members 5 and 6 are formed with a broad width parallel to the conveying direction of the retainers R so that the holding members 5 and 6 can hold a plurality of product-filled bags at one time. Furthermore, a holding piece 47 consisting of a rubber material, etc. is attached to the holding part of the holding member 6, and a floating plate 48 is attached to the holding part of the holding member 5 by means of a pin 49 (the central portion of the floating plate 48 is pin-fastened via a bush). Moreover, a holding piece 51 that likewise consists of a rubber material, etc. is attached in a position that faces the holding piece 47.

The advancing-and-retracting driving means that causes the sliding shaft member 31 to advance and retract includes, along with other elements, an advancing-and-retracting block 52, a swing member 53, a connecting rod 55, a cam roller 56, an advancing-and-retracting cam 58 and a connecting rod 59. The advancing-and-retracting block 52 is fastened to the two sliding shafts 32 inside the box-shaped frame main body portion 16a. The swing member 53 has a first lever 53a and a second lever 53b and is shaft-supported on the supporting shaft 15 via a bearing 54 in a swingable fashion. The connecting rod 55 connects the first lever 53a and the advancing-and-retracting block 52. The cam roller 56 is disposed on the tip end of the second lever 53b and has an axis of rotation in the plane perpendicular to the base guide path. The advancing-and-retracting cam 58 has a cam groove 57 through which the cam roller 56 rolls. This advancing-and-retracting cam 58 is disposed in the plane parallel to the above-described base guide path so that the advancing-and-retracting driving cam 58 is free to make a reciprocating swing motion upward and downward within such a plane. The connecting rod 59 is connected to the advancing-and-retracting cam 58 and is raised and lowered by a driving source that is not shown in the drawings. One end (on the upstream side of the conveying path of the retainers R) of the advancing-and-retracting driving cam 58 is pivotally shaft-supported in a bearing portion 62 that is installed on the side surface of a driving box 61 on the base 4, and the intermediate portion of this cam 58 is connected to the connecting rod 59.

When the connecting rod 59 is raised and lowered so that the advancing-and-retracting cam 58 makes a reciprocating swing motion upward and downward, the cam roller 56 and swing member 53 swing. As a result, the advancing-and-retracting block 52 and sliding shaft member 31 are advanced and retracted (see the positions indicated by solid lines and the positions indicated by imaginary lines in Figure 2).

The opening-and-closing driving means that opens and closes the pair of holding members 5 and 6 is comprised of an air cylinder 63 which is disposed on the upper portion of the advancing-and-retracting block 52, the cylinder rod 64 of this air cylinder 63, and an opening-and-closing lever 65 which connects the tip end of the cylinder rod 64 and the attachment member 45. When the air cylinder 63 is actuated and the cylinder rod 64 is extended, the holding members 5 and 6 open in linkage with this extension. When the cylinder rod 64 is retracted, the holding members close in linkage with this retraction.

Though an example of the operation of the extraction apparatus 1 is described above, the description of such an operation will be supplemented as follows:
(1) The holding members 5 and 6 initiate a movement in the direction indicated by the arrows from the positions indicated by the solid lines in Figure 1 when the base member 7 begins to move as a result of the swing motion of the swinging lever 14 of the reciprocating driving means. At the same time, the cam roller 27 of the upward-downward swinging means begins to roll along the cam groove 28 of the raising-and-lowering cam 29, and the cam roller 56 of the advancing-and-retracting driving means begins to roll along the cam groove 57 of the advancing-and-retracting cam 58.
(2) When the movement of the holding members 5 and 6 is synchronized with the conveying of the retainers R, the air cylinder 63 of the opening-and-closing driving means is immediately actuated. As a result, the holding members 5 and 6 close, and the areas in the vicinity of the mouth portions of a plurality of product-filled bags are held from above (see Figure 2).
(3) Next, the cam roller 27 is raised along the cam groove 28. As a result, the frame member 16 swings upward about the supporting shaft 15, and the holding members 5 and 6 are raised so that the product-filled bags W are pulled out of the retainers R. In this case, the connecting rod 59 begins to rise at an intermediate point; consequently, the advancing-and-retracting cam 58 swings upward, and the sliding shaft member 31 advances. As a result, the holding members 5 and 6 are raised substantially in a vertical direction.
(4) The advancing-and-retracting cam 58 swings further upward, and the sliding shaft member 31 advances, so that the product-filled bags W held by the holding members 5 and 6 advance and are removed from the conveying path of the retainers R (see the imaginary line in Figure 2). At this point, the air cylinder of the opening-and-closing driving means is actuated in reverse, and the holding members 5 and 6 open and drop the product-filled bags W.
(5) Then, the reciprocating driving means and advancing-and-retracting driving means are actuated in reverse, so that the holding members 5 and 6 are returned to their original positions (positions indicated by the solid lines in Figure 1).

The base member 7 may stop after the product-filled bags W have been pulled out of the retainers R (positions indicated by the imaginary lines in Figure 1). Moreover, in the above-described example, the holding members 5 and 6 are raised almost vertically. However, it is also possible to cause the sliding shaft member 31 to advance even further from an intermediate point, so that the product-filled bags W are removed from the conveying path even earlier.

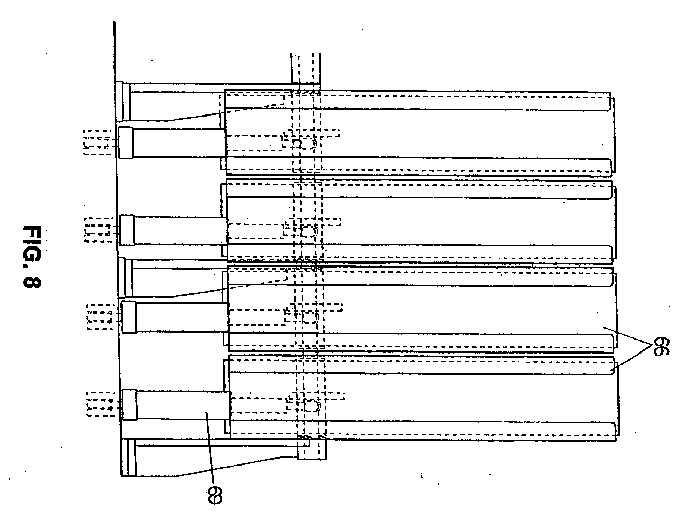

Figures 7 and 8 show a feed-out apparatus which feeds the product-filled bags dropped from the holding members 5 and 6 toward the next process.

This feed-out apparatus includes a plurality of chutes 66 (that correspond to the respective product-filled bags W) installed in a row along the conveying path of the retainers R in the vicinity of the conveying path, and it also includes a common product conveyor 67. The respective chutes 66 are supported by swing supporting shafts 68 so that the chutes 66 are swingable. The angles of inclination of the chutes 66 are varied by respective air cylinders 69 so that the chutes 66 are positioned in a receiving position (see the solid lines in Figure 7) or an avoidance position (see the imaginary lines in Figure 7).

The chutes 66 are ordinarily positioned in the receiving position, so that these chutes 66 receive the product-filled bags W and allow these bags to fall onto the product conveyor 67. However, in cases where, for example, it is detected by a detection means installed on the upstream side of the conveying path of the retainers R that a certain product-filled bag W is a defective bag, then the air cylinder 69 of the chute 66 that corresponds to the product-filled bag W that has been removed is actuated, so that the chute 66 swings to the avoidance position. As a result, the defective bag drops "as is" and is transferred to a separate location via a dropping guide 71.

Alternatively, it can be arranged so that when a defective bag is detected the set of four product-filled bags W including the defective bag is not pulled out by the extraction apparatus 1 but is instead removed by a separate extraction apparatus on the downstream side of the extraction apparatus 1. In this case, there is no need to incline the chutes 66, and the air cylinders 69 are unnecessary.

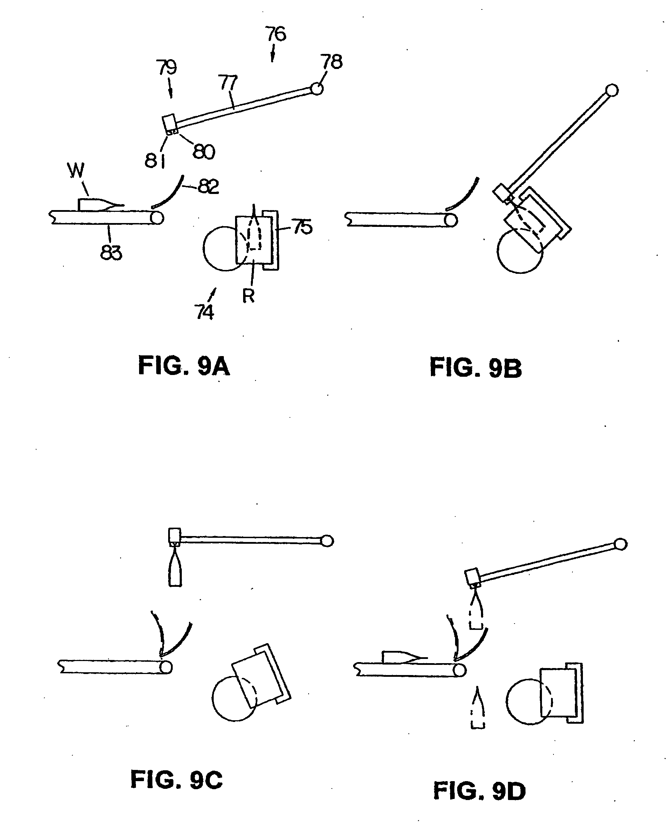

Figures 9A through 9D show one configuration of an extraction method for removing product-filled bags W from continuously conveyed retainers R. Contrarily to the method described so far in which the retainers R are conveyed in a vertical attitude, in the method shown in Figures 9A through 9D the retainers R are conveyed in an attitude that is inclined in the vertical plane with respect to the conveying direction of the retainers R when the product-filled bags are pulled out.

More specifically, in the retainer conveying device (screw conveyor) 74, as shown in Figures 9A through 9D, the retainers R are guided by a retainer conveying guide 75 so that the retainers R are inclined from a vertical attitude. Then, after the product-filled bags W are pulled out, the retainers R are likewise guided by the retainer conveying guide 75 and returned to a vertical attitude.

In Figures 9A through 9B, the extraction apparatus 76 used in this extraction method is shown with a portion of the apparatus simplified. This extraction apparatus 76 may be viewed as an apparatus in which the sliding shaft member 31 of the extraction apparatus 1 is fastened to the frame main body portion16a (no advancing-and-retracting driving means is required). Alternatively, this may be described as an apparatus in which the holding means 79 is installed via an appropriate attachment member to the tip of the frame member 16 of the above-described extraction apparatus 1. In other words, a shaft member 77 (corresponding to the frame 16a and sliding shaft member 31) makes only an upward-downward swing motion about a supporting shaft 78 (corresponding to the supporting shaft 15) that is disposed on a base member (corresponding to the base member 7) that is not shown in the drawings. A holding means 79 (corresponding to the holding means 37) is likewise disposed on the tip end portion of the shaft member 77. Furthermore, the shaft member 77 is arranged so that when the shaft member 77 swings furthest downward, the shaft member 77 is inclined considerably downward and the orientation of the shaft member 77 is substantially perpendicular to the orientation of the inclination of the retainers R, allowing the holding members 80 and 81 to grip the areas in the vicinity of the mouth portions of the product-filled bags W.

The process of the extraction method will be described as follows with reference to Figures 9A through 9D:
(a) The retainers R accommodating the product-filled bags W that are to be extracted next are conveyed in a vertical attitude in front of the extraction apparatus 76. From this point, the retainers R are guided by the retainer conveying guide 75 and are gradually inclined. Meanwhile, the extraction apparatus 76 is in the process of returning to its original position along a base guide path that is parallel to the conveying path of the retainers R, and the shaft member 77 has begun to swing toward a position underneath.
(b) The extraction apparatus 76 that has returned to its original position begins to track the retainers R, and the holding members 80 and 81 close and hold the product-filled bags W inside the inclined retainers R.
(c) Next, the shaft member 77 swings upward, and the holding members 80 and 81 also swing and pull the product-filled bags W from the retainers R. After the bags are pulled out, the movement of the extraction apparatus 76 along the base guide path stops; meanwhile, the retainers R from which the product-filled bags W have been pulled out are guided by the retainer conveying guide 75 and gradually returned to a vertical attitude. When the shaft member 77 swings upward, the product-filled bags W are raised in a circular-arc-form movement, and the bags are naturally conveyed to the outside of the conveying path of the retainers R. In the raised position, the holding members 80 and 81 open, so that the product-filled bags W drop onto the chutes 82 and are further dropped onto a product conveyor 83. The chutes 82 are provided so as to be movable between a receiving position (solid line) and an avoidance position (imaginary line). When the shaft member 77 swings upward, the chutes 82 move to the avoidance position so that interference with the product-filled bags W is avoided, and the chutes 82 return to the receiving position before the holding members 80 and 81 open.
(d) After the product-filled bags W drop, the extraction apparatus 76 begins to return to its original position, and the shaft member 77 begins to swing downward. Furthermore, the retainers R from which the product-filled bags W have been pulled out have returned to a vertical attitude at this point in time.

Meanwhile, in cases where product-filled bags W that have been pulled out are defective, the chutes 82 stop in the avoidance position as indicated by the imaginary lines, and the holding members 80 and 81 do not open in the above-described step (c) but instead open at an intermediate point while being lowered, so that the defective bags are dropped before reaching the conveyor 83.

Furthermore, in cases where the product-filled bags are pulled out while the retainers R are continuously conveyed, it is necessary to cause the holding members to make a tracking movement along the conveying path at the same speed as the retainers as described above. However, in the case of intermittent conveying in which the retainers R are stopped when the bags are pulled out, the above-described tracking motion and return are unnecessary. Accordingly, the reciprocating driving means is also not required.

As seen from the above, according to the present invention, it is possible to obtain an extraction apparatus in which the structure and control system are simple, the burden on the driving system is small, and the size of the apparatus can be reduced. Furthermore, the extraction method of the present invention allows the structure of the extraction apparatus to be further simplified.

## Claims

1. An apparatus for extracting product-filled bags from retainers that are conveyed along a rectilinear path at a specified conveying pitch and speed in a retainer type bag-filling packaging system, said product-filled bag extraction apparatus comprising:
a base member which is disposed so as to be free to make a reciprocating motion along a base guide path that is parallel to a rectilinear path of retainers,
a reciprocating driving means which causes said base member to make said reciprocating motion,
a frame member supported on a supporting shaft which is on said base member disposed parallel to said base guide path so that said frame member is free to swing upward and downward,
an upward-downward swinging means which causes said frame member to swing upward and downward along with a reciprocating motion of said base member,
a sliding shaft member which is disposed perpendicular to said base guide path and is supported on said frame member so as to be free to advance and retract in a direction of axis thereof,
a holding means which is disposed on a front end portion of said sliding shaft member and is equipped with a pair of holding members that hold areas in the vicinity of mouth portions of product-filled bags,
an advancing-and-retracting driving means which causes said sliding shaft member to advance and retract, and
an opening-and-closing driving means which is attached to said sliding shaft member and advances and retracts together with said sliding shaft member, thus opening and closing said pair of holding members.

2. The apparatus for extracting product-filled bags according to Claim 1, wherein said advancing-and-retracting driving means is comprised of:
a swing member which is shaft-supported on a supporting shaft that is parallel on said base member to said base guide path so that said swing member is free to swing, said swing member having a first lever and a second lever,
a connecting member which connects said first lever and said sliding shaft member,
a cam roller which is disposed on a tip end of said second lever and has a rotating shaft in a plane that is perpendicular to said base guide path, and
an advancing-and-retracting cam which has a cam groove through which said cam roller rolls, said advancing-and-retracting cam being disposed in a plane that is parallel to said base guide path and is free to make a reciprocating motion in said plane, and wherein
said swing member swings along with a reciprocating motion of said advancing-and-retracting cam, and said sliding shaft member advances and retracts in linkage with a swing motion of said swing member.

3. An apparatus for extracting product-filled bags from retainers that are conveyed along a rectilinear path at a specified conveying pitch and speed in a retainer type bag-filling packaging system, said product-filled bag extraction apparatus comprising:
a base member which is disposed so as to be free to make a reciprocating motion along a base guide path that is parallel to a rectilinear path of retainers,
a reciprocating driving means which causes said base member to make said reciprocating motion,
a frame member supported on a supporting shaft which is on said base member disposed parallel to said base guide path so that said frame member is free to swing upward and downward,
an upward-downward swinging means which causes said frame member to swing upward and downward along with a reciprocating motion of said base member,
a holding means which is disposed on a front end portion of said frame member and is equipped with a pair of holding members that hold areas in the vicinity of mouth portions of product-filled bags, and
an opening-and-closing driving means that opens and closes said pair of holding members.

4. The apparatus for extracting product-filled bags according to any one of Claims 1 through 3, wherein said upward-downward swinging means is comprised of:
a cam roller attachment link, one end thereof being pin-connected to said frame member,
a cam roller which is attached to said cam roller attachment link and has a horizontal axis of rotation in a plane that is perpendicular to said base guide path,
a fixed raising-and-lowering cam which has a cam groove through which said cam roller rolls, and
a connecting link, one end thereof being pin-connected to another end of said cam roller attachment link and another end thereof being pin-connected to said base member; and wherein
said connecting link, said cam roller attachment link and said frame member form a parallel link mechanism, and
said cam roller is raised and lowered in linkage with a reciprocating motion of said base member, causing said cam roller attachment link to perform a translational motion, so that an axis of rotation of said cam roller is maintained in a horizontal attitude.

5. An extraction method for extracting product-filled bags from retainers that are continuously or intermittently conveyed in a retainer type bag-filling packaging system, said product-filled bag extraction method comprising the steps of:
inclining retainers in a vertical plane with respect to a retainer conveying direction,
holding areas in the vicinity of mouth portions of product-filled bags by holding members,
extracting said product-filled bags substantially along a direction of inclination and transferring said bags out of said retainer conveying path, and
dropping said product-filled bags.
